# EUROPEAN PATENT APPLICATION

(11) **EP 4 616 745 A1**
(43) Date of publication of application: **17.09.2025**
(21) Application number: 24182919.1
(22) Date of filing: 18.06.2024
(51) Int. Cl.: A41G 5/00

(54) **EYELASH LIFT PAD**

(30) Priority: 11.03.2024 US 202418601545
(71) Applicant: Ayasal LLC, Casper WY 82609 (US)
(72) Inventor: YAN, Hao, Missouri, 63074 (US)
(74) Representative: Wathey, William Julian Andrew

(57) **Abstract**

An eyelash lift pad includes an adhesive body having at least one exposed adhesive surface. The adhesive body is formed during manufacturing of the eyelash lift pad and prior to packaging of the eyelash lift pad.

## Description

### TECHNICAL FIELD

The present disclosure relates generally to an eyelash lift pad.

### BACKGROUND

In the beauty industry, there are several ways to enhance the appearance of eyelashes. For example, eyelash extensions may be applied to the eyelashes. Another method is to use an eyelash curler on the eyelashes. In another example, eyelash lifts may be applied to the eyelid to curl and lift the eyelashes.

### BRIEF SUMMARY

An eyelash lift includes an adhesive body having at least one exposed adhesive surface, wherein the adhesive body is formed during manufacturing of the eyelash lift pad and prior to packaging of the eyelash lift pad.

A method for manufacturing one or more eyelash lift pads. The method includes preparing a polyurethane adhesive, dispensing the polyurethane adhesive into a mold assembly to form the one or more eyelash lift pads, and demolding the one or more eyelash lift pads, wherein the one or more eyelash lift pas have at least on exposed adhesive surface.

### BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, and/or structurally similar elements.
FIG. 1A illustrates a top view of eyelash lift pads, according to the present disclosure.
FIG. 1B illustrates a bottom view of an eyelash lift pad of FIG. 1A, according to the present disclosure.
FIG. 2 illustrates an eyelash lift pad of FIG. 1A applied to a user's eye, according to the present disclosure.
FIG. 3 illustrates the eyelash lift pad as applied in FIG. 2 with the user's eyelashes curved onto the eyelash lift pad, according to the present disclosure.

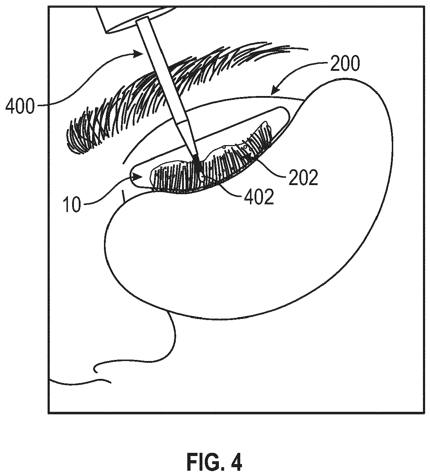

FIG. 4 illustrates the eyelash lift pad as applied in FIG. 3 with application of a solution to the eyelashes, according to the present disclosure.
FIG. 5 illustrates a method of making the eyelash lift pads of FIG. 1A, according to the present disclosure.
FIG. 6 illustrates another method of making the eyelash lift pads of FIG. 1A, according to the present disclosure.
FIG. 7 illustrates a schematic diagram of a system for carrying out the method of FIG. 5 or FIG. 6, according to the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the spirit and the scope of the present disclosure.

As used herein, the terms "first" and "second," and the like, may be used interchangeably to distinguish one component from another and are not intended to signify location or importance of the individual components.

The singular forms "a," "an," and "the" include plural references unless the context clearly dictates otherwise.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

The present disclosure provides an eyelash lift pad that provides an adhesive on a first eyelid facing surface for temporarily securing to the eyelid and an adhesive on a second eyelash facing surface for temporarily securing the eyelashes to the eyelash lift pad. The eyelash lift pads of the present disclosure are provided to the user with the adhesive already applied to the first surface and/or the second surface. In this manner, the user may apply the eyelash lift pad directly to the eyelid upon removal from a backing material with no application of adhesive or glue required by the user. Once applied to the eyelid, the user may curl and/or lift the eyelashes as described herein. After curling and/or lifting the eyelashes, the user may remove the eyelash lift pad from the eyelid. Therefore, the eyelash lift pads of the present disclosure provide a temporarily adhesive surface for both the eyelids and the eyelashes to be adhered to and removed from the eyelash lift pad.

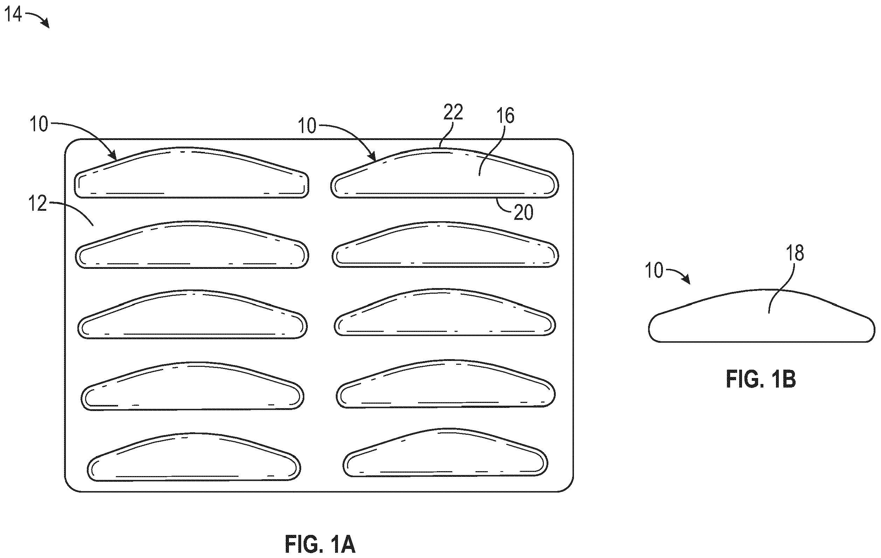

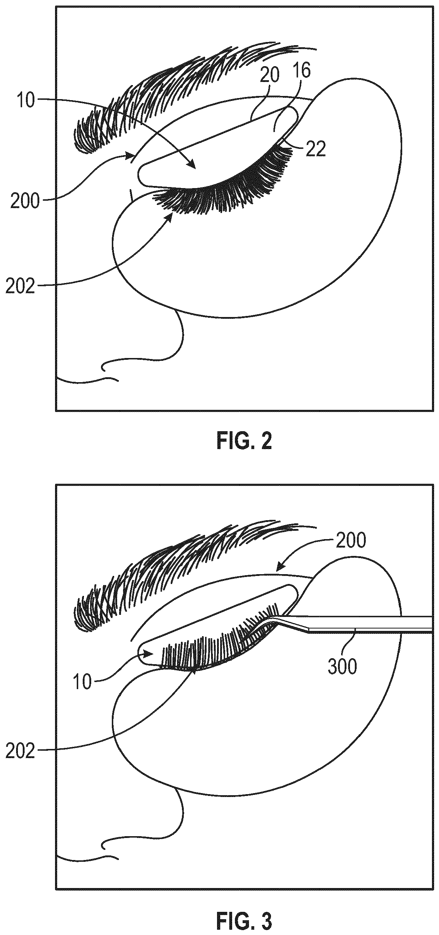

FIG. 1A illustrates a plurality of eyelash lift pads 10 on a backing material 12. Although eight eyelash lift pads 10 are illustrated, more or fewer may be provided. For example, a single eyelash lift pad 10 may be provided on the backing material 12. In some examples, the eyelash lift pads 10 are provided in multiples of two on the backing material 12 such that there is one eyelash lift pad 10 for each eye of a user. The eyelash lift pads 10 on the backing material 12 form an eyelash lift pad kit 14. Although not illustrated in FIG. 1, the eyelash lift pad kit 14 may include other features, such as, for example, a tool for pressing the eyelashes onto the eyelash lift pad 10 (e.g., the tool 300 of FIG. 3), a brush for applying a dye solution, a permanent solution, a fixation solution, a nutrition solution, or other solutions or lotions to the eyelashes (e.g., the brush 400), or other tools used for curling, lifting, or dying the eyelashes. The eyelash lift pad kit 14 may include other accessories such as lotions, solutions, eyelash flue, undereye patches, or the like. In some examples, each of the eyelash lift pads 10 of the eyelash lift pad kit 14 may be the same. In some examples, the eyelash lift pads 10 of the eyelash lift pad kit 14 may be provided in pairs of different sizes or shapes to allow the user to customize the shape of the eyelashes or to accommodate a variety of eyelid sizes.

With reference to FIGS. 1A and 1B, the eyelash lift pads 10 are shaped to allow a user to generate a curved shape for the eyelashes. Each eyelash lift pad 10 has a first eyelid facing surface 18, also referred to as a first surface 18, for securing to the eyelid of a user and a second eyelash facing surface 16, also referred to as a second surface 16, that is opposed to the first surface 18 for resting the eyelashes on during the curling thereof. The second surface 16 is curved vertically with respect to the first surface 18 such that when placed on the user's eyelid, the second surface 16 curves outward with respect to the eyelid. This outward curve allows for the eyelashes to be curled using the eyelash lift pad 10. The first surface 18 may be substantially flat or planar for mating with the user's eyelid. As illustrated in FIGS. 1A and 1B, a top edge 22 of the eyelash lift pad 10 is curved. The curve may substantially conform with the shape of a user's eye (as illustrated in FIG. 2). A bottom edge 20 of the eyelash lift pad 10 is illustrated as substantially shape, but may have other shapes, such as curved.

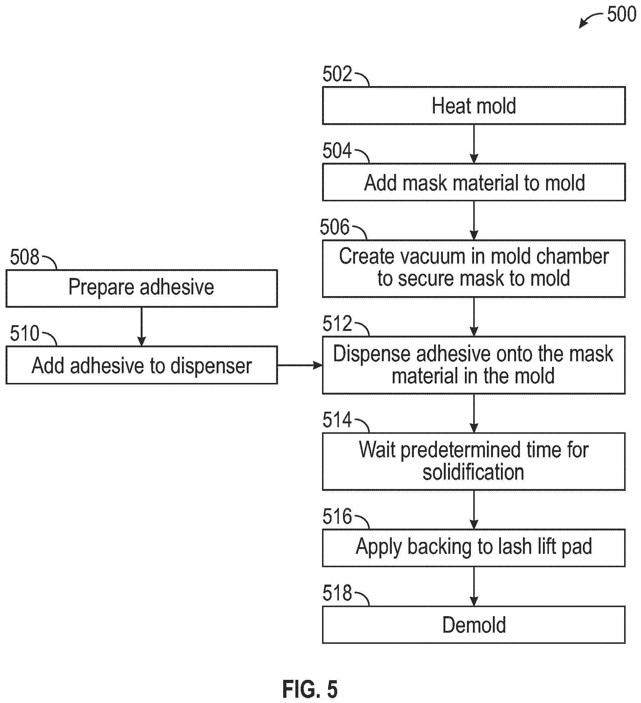

Each eyelash lift pad 10 has a body formed of an adhesive material. For example, the eyelash lift pad 10 may have a body formed of a polyurethane adhesive. Accordingly, since the eyelash lift pad 10 itself is formed of an adhesive, each of the first surface 18 and the second surface 16 present adhesive or sticky surfaces. In some examples, as described with respect to FIG. 5, a mask material is provided on the second surface 16 such that there is no exposed adhesive surface.

The eyelash lift pad 10 is adhesive and sticky such that the eyelash lift pad 10 is removably adhered or removably secured to the backing material 12. The eyelash lift pad 10 is provided to the user secured to the backing material 12 in the condition illustrated in FIG. 1A. The backing material 12 is a thin film, such as a polyethylene terephthalate ("PET") layer. Since the eyelash lift pad 10 is temporarily secured to the backing material 12, the eyelash lift pad 10 can be removed from the backing material 12 by the user and then resecured (with the same stickiness that secured the eyelash lift pad 10 to the backing material 12) to the user's body, and, in particular, to the user's eyelid.

When a user desires to enhance their eyelashes, the user removes the eyelash lift pad 10 from the backing material 12 and applies the eyelash lift pad 10 to the user's eyelid 200, as shown in FIG. 2. Since the entire eyelash lift pad 10 is formed of an adhesive material, the first surface 18 is capable of being temporarily secured to both the backing material 12 and the user's eyelid 200. That is, the adhesiveness of the first surface 18 removably adheres or removably secures the eyelash lift pad 10 to the eyelid 200. The adhesiveness of the first surface 18, thus, removably adheres or removably secures the eyelash lift pad 10 to both the backing material 12 and the user's eyelid 200. The adhesiveness of the first surface 18 is created during manufacturing, and, thus, prior to packaging for the user such that no additional glue, adhesive, or other securing means is applied to the first surface 18 to adhere the eyelash lift pad 10 to the eyelid 200.

In the position of FIG. 2, the eyelashes 202 are in their original state and have not yet been applied to the eyelash lift pad 10. After the eyelash lift pad 10 is secured (temporarily) to the eyelid 200, the user may push the eyelashes 202 onto the second surface 16 of the eyelash lift pad 10, as shown in FIG. 3. The second surface 16 of the eyelash lift pad 10 is curved to provide a curve to the eyelashes 202. The adhesiveness of the second surface 16 removably adheres or removably secures the eyelashes 202 to the second surface of the eyelash lift pad 10. As with the adhesiveness of the first surface 18, the adhesiveness of the second surface 16 is created during manufacturing, and, thus, prior packaging for the user such that no additional glue, adhesive, or other securing means is applied to the second surface 16 to adhere the eyelashes 202 to the eyelash lift pad 10. A tool, such as the tool 300 illustrated in FIG. 3, may assist the user in securing the eyelashes 202 to the eyelash lift pad 10, though such a tool is optional. As noted, the securing of the eyelashes 202 to the eyelash lift pad 10 is temporary to allow for the user to treat (e.g., perm or dye) to the eyelashes 202. The eyelash lift pad 10 is removed from the eyelid 200 after the treatment is complete.

Once the eyelashes 202 are secured to the eyelash lift pad 10, the user may treat the eyelashes 202. For example, the user may apply a solution 402 to the eyelashes 202 with a brush 400. The solution 402 may be a dye solution or permanent solution to color or curl, respectively, the eyelashes 202. Although a single solution 402 is shown, more than one may be applied (e.g., both a dye and a permanent). The solution 402 is allowed to remain on the eyelashes 202 for the required time to achieve the desired effect and, in some cases, is washed or removed from the eyelashes 202. Once the treatment is complete, and the eyelashes 202 are at their desired condition, the user removes the eyelash lift pad 10 from the eyelid 200. The eyelash lift pad 10 may be disposed of, or thrown away, or the eyelash lift pad 10 may be resecured to the backing material 12 to be reused, or the eyelash lift pad 10 may be secured to another eyelid 200 for reuse. The adhesiveness of the first surface 18 allows for the eyelash lift pad 10 to be resecured to the backing material 12 and, optionally, reapplied to a user's eyelid.

Accordingly, the eyelash lift pad 10 of the present disclosure provides two surfaces that are sticky or adhesive to allow for removable securing of the eyelash lift pad 10 to the backing material 12, the eyelid 200, the eyelashes 202, or combinations thereof. The entire eyelash lift pad 10 may be formed of adhesive such that the entire first surface 18 and/or the entire second surface 16 are adhesive.

Alternatively, as described in more detail with respect to FIG. 5, a mask material may be applied to the first surface 18 and/or the second surface 16 such that the respective surface is non-adhesive (due to the presence of the mask). In this case, the user may apply a glue or adhesive to the non-adhesive surface. For example, the first surface 18 may be adhesive and the second surface 16 (although adhesive) may have a mask applied thereto such that the surface presents a non-adhesive surface. In this manner, the user may rely on the adhesiveness of the first surface 18 to secure the eyelash lift pad 10 to the eyelid, however, the user must apply an adhesive to the second surface 16 (i.e., on top of the mask) to allow for securing of the eyelashes thereto. In another example, the second surface 16 may be adhesive and the first surface 18 may have a mask applied thereto such that the surface presents a non-adhesive surface. In this manner, the user may rely on the adhesiveness of the second surface 16 to secure the eyelashes to the eyelash lift pad 10, however, the user must apply an adhesive to the first surface 18 (i.e., on top of the mask) to allow for securing to the eyelid.

Stated another way, the bottom surface (e.g., the first surface 18) and the top surface (e.g., the second surface 16) of the eyelash lift pad 10, also referred to as a gasket, are sticky surfaces. After being removed from the transparent plastic plate (e.g., the backing material 12), the eyelash lift pad 10 can be directly attached to the eyelids and the eyelashes can be directly glued to the gasket, eliminating the need of the user to apply glue prior to use of the eyelash lift pad 10. The eyelash lift pad 10 of the present disclosure simplifies the use of the product and solves the operational shortcomings of the eyelash lift not being firmly adhered to the eyelids and the eyelashes not being well fixed on the gasket. The eyelash lift pad of the present disclosure can be cleaned and/or used repeatedly.

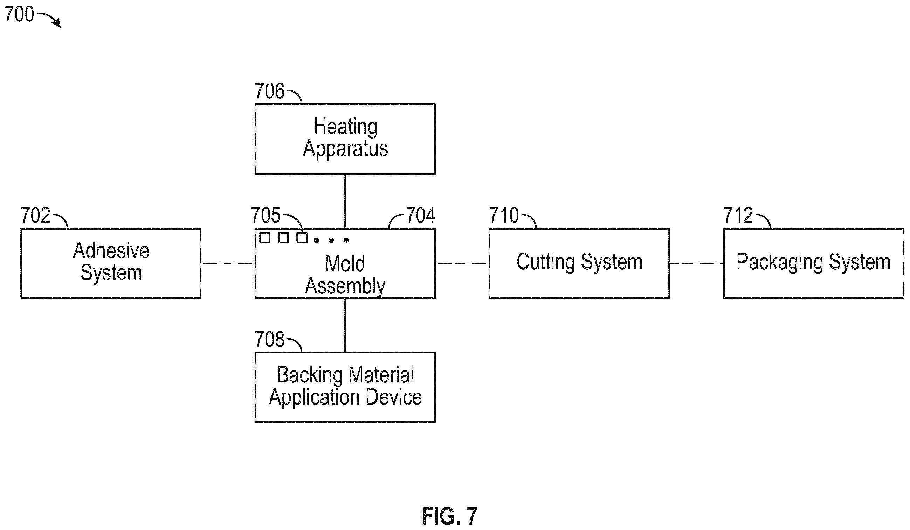

FIG. 5 illustrates a method 500 of making or manufacturing an eyelash lift pad 10 of FIG. 1. In the method 500, the steps 508 and 510 may be performed prior to any of the steps 502, 504, or 506, or concurrently with any of the steps 502, 504, and 506. FIG. 7 illustrates a system 700 for carrying out the method 500.

The method of FIG. 5 illustrates a method for one side adhesive eyelash lift pads 10. The method 500 results in an eyelash lift pad 10 having a mask thereon. In some cases, the mask may be removable such that all surfaces of the eyelash lift pad 10 are adhesive (i.e., such that the user is not required to apply an adhesive prior to use). In some cases, the mask may be permanent such that at least one surface of the eyelash lift pad 10 is non-adhesive and the user must apply an adhesive or glue to the non-adhesive surface prior to use.

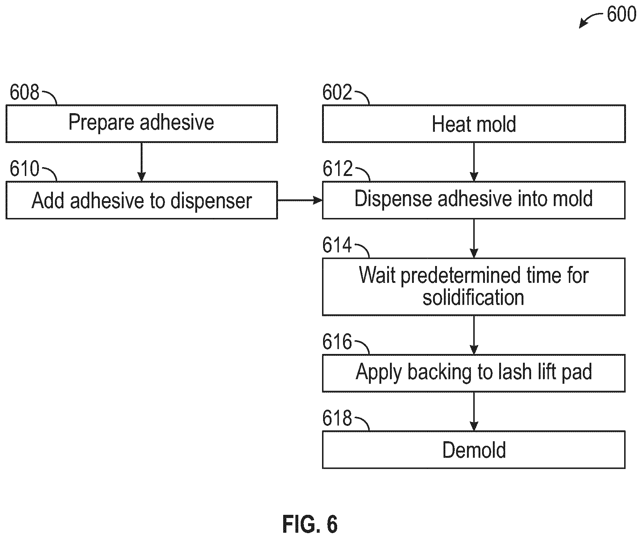

Referring to FIG. 5 and 6, in step 502, the method 500 employs a heating apparatus 706 to heat a mold assembly 704. The mold is utilized to create the eyelash lift pads 10. The mold assembly 704 is heated until a surface temperature of the mold assembly 704 ranges between 85 degrees Celsius and 90 degrees Celsius, inclusive of the endpoints. In step 504, a mask material is added to the mold assembly 704. The mask material may be a transparent thermoplastic polyurethane ("TPU") material. The mask material provides a surface on which the eyelash lift pad 10 is formed such that the eyelash lift pad 10 may be removed from the mold assembly 704. That is, the mask material is provided to facilitate removal of the eyelash lift pad 10 from the mold assembly 704.

At step 506, a vacuum is created in the mold chamber to secure the mask material to the mold. In step 506, the method extracts air from the mold assembly 704 through holes, facilitating smooth and secure adsorption of the mask material onto the mold surface for subsequent demolding.

In step 508, an adhesive that forms the eyelash lift pad 10 is generated in an adhesive system 702. To prepare the adhesive, component A and component B of a polyurethane adhesive are mixed together to form a polyurethane ("PU") adhesive. In one example, component A is a polyurethane prepolymer and component B is a mixture containing isocyanate. Once mixed, a chemical reaction occurs resulting in a polyurethane adhesive material. The PU adhesive is a robust adhesive and forms the body of the eyelash lift pad 10. The viscosity and the level of adhesion of the surfaces (e.g., of each of the first surface 18 and the second surface 16) depends on the ratio of component A and component B. Table 1 below illustrates several example embodiments of components A and B that form the PU adhesive.

**Table 1**

| Example | Component A | | Component B | |
|---|---|---|---|---|
| 1 | 100 g | 81.30 % by weight | 23 g | 18.70 % by weight |
| 2 | 100 g | 82.39 % by weight | 21.5 g | 17.70 % by weight |
| 3 | 100 g | 84.03 % by weight | 19 g | 15.97 % by weight |

Accordingly, in some examples, component A is present in the mixture in the range of 80 grams to 120 grams, 90 grams to 110 grams, 95 grams to 105 grams, and, in some examples, is about 100 grams, plus or minus 10 percent. In some examples, component B is present in the mixture in the range of 15 grams to 30 grams, 20 grams to 25 grams, 18 grams to 24 grams, 21 grams to 23 grams, and, in some examples is about 23 grams, or about 21.5 grams, or about 19 grams, plus or minus 10 percent. Any combination of ranges or discrete values within the ranges of both A and B are contemplated.

In some examples, component A is present in the mixture in the range of 75 percent by weight to 90 percent by weight, 80 percent by weight to 85 percent by weight, 81 percent by weight to 84 percent by weight, about 80 precent by weight, about 81 percent by weight, about 82 percent by weight, about 83 percent by weight, or about 84 percent by weight, or about 85 percent by weight, plus or minus 10 percent. In some examples, component B is present in the mixture in the range of 10 percent by weight to 25 percent by weight, 15 percent by weight to 20 percent by weight, about 15 percent by weight, about 16 percent by weight, about 17 percent by weight, about 18 percent by weight, about 19 percent by weight, or about 20 percent by weight, plus or minus 10 percent.

The above values and ranges are exemplary. The component A and the component B are selected to achieve a desired or predetermined stickiness or adhesiveness of the first surface 18 and the second surface 16 or a desired or predetermined hardness. For example, if a stronger stickiness or adhesiveness is desired for the eyelash lift pad 10, the A/B ratio is adjusted to make a softer solution, while if a harder eyelash lift pad 10 is desired, the A/B ratio is adjusted to reduce the stickiness. The A/B ratio is adjusted keeping in mind that a softer solution is more challenging to use (e.g., may stick to the user or the mold), while a harder material may present challenges in not being sticky enough for use. Therefore, the A/B ratio is carefully selected to balance the aforementioned factors.

In step 510, the PU adhesive, now mixed, is added to a dispenser. At step 512, the PU adhesive is poured into the mold (i.e., onto the mask in the mold) using the adhesive system 702. In step 514, the method waits a predetermined waiting period for the PU adhesive to solidify. In some examples, this is from three minutes to five minutes, plus or minus 10 precent.

Once the predetermined waiting period has elapsed, the PU adhesive is solidified such that the eyelash lift pad 10 is now formed. At step 516, a backing material application device 708 applies the backing material 12 to the eyelash lift pad 10. The backing material 12 may be a polyethylene terephthalate ("PET") thin film layer. In some examples, the backing material or the PET thin film is 0.075mm thick. In step 518, the eyelash lift pad 10 with the backing material 12 adhered thereto are demolded from the mold assembly 704.

In some examples, the mold assembly 704 includes a plurality of eyelash lift pad molds 705. In such an example, a plurality of eyelash lift pads 10 are formed simultaneously with the method 500. At step 516 in such an example, a single backing material may be applied to a plurality of eyelash lift pads 10. Therefore, following a predetermined waiting period, the backing material 12 (with the plurality of eyelash lift pads 10 thereon) are transferred to a cutting system 710, where the backing material 12 can be cut into a predetermined kit size (e.g., ten eyelash lift pads 10 as shown in FIG. 1A). The kit is then packaged in the packaging system 712 for user convenience. As mentioned earlier, since adhesive forms the eyelash lift pad 10 during the manufacturing process, users do not need to use any glue, adhesive.

Considering the aforementioned method 500 in conjunction with FIGS. 1A and 1B, the first surface 18 is the surface to which the backing material 12 is applied in step 516. The second surface 16, therefore, is formed adjacent the mask material when the adhesive is poured into the mold in step 512. Thus, when demolded, the first surface 18 is adhered to the backing material 12 (to be removed later by the user) and the second surface 16 is adhered to the mask material. Since the mask material covers (either partially or fully) the second surface 16, the second surface 16 is a non-adhesive surface. In some examples, the mask material is permanently adhered to the second surface 16 and therefore remains on the second surface 16 when provided to the user and the user is required to apply a glue to the mask material on the second surface 16 for securing the eyelashes thereto. In some examples, the mask material is temporarily adhered to the second surface 16. Thus, at any step in the method 500 after demolding, the mask material is removed from the eyelash lift pad 10 to expose the adhesive second surface 16 such that the user is not required to apply glue or adhesive to either of the first surface 18 or the second surface 16.

FIG. 6 illustrates a method 600 for forming an eyelash lift pad 10 in which no masking material is employed. The method 600 is the same as the method 500 except for the omission of steps 504 and 506. Thus, in FIG. 6, steps 602, 608, 610, 612, 614, 616, and 618 are the same as described with respect to FIG. 5. The method 600 forms an eyelash lift pad 10 that has adhesiveness on both the first surface 18 and the second surface 16 with no mask material on either surface. The mask material may be provided in FIG. 5 to facilitate demolding of the eyelash lift pad from the eyelash lift pad molds 705.

Further aspects are provided by the subject matter of the following clauses.

An eyelash lift pad includes an adhesive body having at least one exposed adhesive surface, wherein the adhesive body is formed during manufacturing of the eyelash lift pad and prior to packaging of the eyelash lift pad.

The eyelash lift pad of the preceding clause, wherein the adhesive body is polyurethane adhesive.

The eyelash lift pad of any preceding clause, wherein the at least one exposed adhesive surface comprises a first adhesive surface and a second adhesive surface opposite the first adhesive surface.

The eyelash lift pad of any preceding clause, wherein the first adhesive surface is configured to secure to a user's eyelid without the application of additional adhesive or glue and the second adhesive surface is configured to secure to the user's eyelashes without the application of additional adhesive or glue.

The eyelash lift pad of any preceding clause, wherein the first adhesive surface is configured to secure to a user's eyelid without the application of additional adhesive or glue and the second adhesive surface is covered with a mask material that is non-adhesive such that the user must apply an adhesive or glue to the mask material to secure to the user's eyelashes without the application of additional adhesive or glue.

The eyelash lift pad of any preceding clause, wherein the second adhesive surface is curved to provide a curve to the user's eyelashes.

The eyelash lift pad of any preceding clause, wherein the adhesive body is configured to temporarily and removably secure the eyelash lift pad to a surface.

The eyelash lift pad of any preceding clause, wherein the eyelash lift pad is reusable.

An eyelash lift kit comprising at least one eyelash lift pad according to of any preceding clause, a backing material, wherein the at least one eyelash lift is temporarily secured to the backing material with the at least one exposed adhesive surface.

The eyelash lift kit of any preceding clause, wherein the backing material is a polyethylene terephthalate thin film.

The eyelash lift kit of any preceding clause, further comprising a tool to secure the user's eyelashes to the eyelash lift pad and/or to apply a solution to the user's eyelashes.

The eyelash lift kit of any preceding clause, wherein the at least one eyelash lift pad comprises a plurality of eyelash lift pads provided in pairs of two.

The eyelash lift kit of any preceding clause, wherein each pair of two eyelash lift pads are the same.

The eyelash lift kit of any preceding clause, wherein a first pair of eyelash lift pads is a different size then a second pair of eyelash lifts.

A method for manufacturing one or more eyelash lift pads, the method comprising preparing a polyurethane adhesive, dispensing the polyurethane adhesive into a mold assembly to form the one or more eyelash lift pads, and demolding the one or more eyelash lift pads, wherein the one or more eyelash lift pads have at least one exposed adhesive surface.

The method of any preceding clause, further comprising applying a backing material to a surface of the one or more eyelash lift pads; and packaging the one or more eyelash lifts.

The method of any preceding clause, further comprising providing a masking material in the mold prior to dispensing the polyurethane adhesive to facilitate demolding of the one or more eyelash lift pads, wherein the masking material is non-adhesive.

The method of any preceding clause, wherein preparing the polyurethane adhesive comprises mixing a polyurethane prepolymer with a isocyanate mixture.

The method of any preceding clause, wherein the mold assembly comprises a plurality of molds such that dispensing the polyurethane adhesive comprises dispensing the polyurethane adhesive into the plurality of molds to form a plurality of eyelash lift pads.

The method of any preceding clause, further comprising applying a single backing material to the plurality of eyelash lift pads.

The method of any preceding clause, further comprising cutting the backing material to provide subsets of eyelash lift pads from the plurality of eyelash lift pads.

Although the foregoing description is directed to the preferred embodiments of the present disclosure, other variations and modifications will be apparent to those skilled in the art and may be made without departing from the spirit or the scope of the disclosure. Moreover, features described in connection with one embodiment of the present disclosure may be used in conjunction with other embodiments, even if not explicitly stated above.

## Claims

1. An eyelash lift pad comprising:
an adhesive body having at least one exposed adhesive surface, wherein the adhesive body is formed during manufacturing of the eyelash lift pad and prior to packaging of the eyelash lift pad.

2. The eyelash lift pad of claim 1, wherein the adhesive body is polyurethane adhesive.

3. The eyelash lift pad of claim 1, wherein the at least one exposed adhesive surface comprises a first adhesive surface and a second adhesive surface opposite the first adhesive surface.

4. The eyelash lift pad of claim 3, wherein the first adhesive surface is configured to secure to a user's eyelid without the application of additional adhesive or glue and the second adhesive surface is configured to secure to the user's eyelashes without the application of additional adhesive or glue.

5. The eyelash lift pad of claim 3, wherein the first adhesive surface is configured to secure to a user's eyelid without the application of additional adhesive or glue and the second adhesive surface is covered with a mask material that is non-adhesive such that the user must apply an adhesive or glue to the mask material to secure to the user's eyelashes without the application of additional adhesive or glue.

6. The eyelash lift pad of claim 3, wherein the second adhesive surface is curved to provide a curve to the user's eyelashes.

7. The eyelash lift pad of claim 1, wherein the adhesive body is configured to temporarily and removably secure the eyelash lift pad to a surface, and/or wherein the eyelash lift pad is reusable.

8. An eyelash lift kit comprising:
at least one eyelash lift pad according to claim 1,
a backing material,
wherein the at least one eyelash lift is temporarily secured to the backing material with the at least one exposed adhesive surface.

9. The eyelash lift kit of claim 8, wherein the backing material is a polyethylene terephthalate thin film.

10. The eyelash lift kit of claim 8, further comprising a tool to secure the user's eyelashes to the eyelash lift pad and/or to apply a solution to the user's eyelashes.

11. The eyelash lift kit of claim 8, wherein the at least one eyelash lift pad comprises a plurality of eyelash lift pads provided in pairs of two;
optionally wherein each pair of two eyelash lift pads are the same or wherein a first pair of eyelash lift pads is a different size than a second pair of eyelash lifts.

12. A method for manufacturing one or more eyelash lift pads, the method comprising:
preparing a polyurethane adhesive;
dispensing the polyurethane adhesive into a mold assembly to form the one or more eyelash lift pads; and
demolding the one or more eyelash lift pads,
wherein the one or more eyelash lift pads have at least one exposed adhesive surface.

13. The method of claim 12, further comprising applying a backing material to a surface of the one or more eyelash lift pads; and packaging the one or more eyelash lifts;
optionally wherein the method further comprises providing a masking material in the mold assembly prior to dispensing the polyurethane adhesive to facilitate demolding of the one or more eyelash lift pads, wherein the masking material is non-adhesive.

14. The method of claim 12, wherein preparing the polyurethane adhesive comprises mixing a polyurethane prepolymer with an isocyanate mixture.

15. The method of claim 12, wherein the mold assembly comprises a plurality of molds such that dispensing the polyurethane adhesive comprises dispensing the polyurethane adhesive into the plurality of molds to form a plurality of eyelash lift pads;
optionally wherein the method further comprises applying a single backing material to the plurality of eyelash lift pads, and optionally further comprises cutting the backing material to provide subsets of eyelash lift pads from the plurality of eyelash lift pads.
